# EUROPÄISCHE PATENTANMELDUNG

(11) **EP 2 187 503 A2**
(43) Veröffentlichungstag der Anmeldung: **19.05.2010**
(21) Anmeldenummer: 09450217.6
(22) Anmeldetag: 17.11.2009
(51) Int. Cl.: H02K 1/27

(54) **Permanentmagneterregte Maschine**

(30) Priorität: 17.11.2008 AT 17812008
(71) Anmelder: Traktionssysteme Austria GmbH, 2351 Wiener Neudorf (AT)
(72) Erfinder: Neudorfer, Harald, 2514 Traiskirchen (AT)
(74) Vertreter: Sonn & Partner Patentanwälte

(57) **Zusammenfassung**

Die Erfindung betrifft eine permanentmagneterregte Maschine (1) mit einem Stator (2), bestehend aus einem Statorblechpaket (4) mit Nuten (5) zur Aufnahme einer Statorwicklung (6) und mit einem gegenüber dem Stator (2) drehbar gelagerten Rotor (3) bestehend aus einem auf einer Rotorwelle (10) angeordneten, mit seitlichen Pressplatten (11, 12) abgeschlossenen Rotorblechpaket (7) mit einer Vielzahl um den Umfang des Rotors (3) angeordneter axialer Schlitze (8) und darin angeordneter Permanentmagnete (9). Zur Erhöhung des Wirkungsgrads der Maschine (1) und Verbesserung der mechanischen Stabilität ist vorgesehen, dass die Schlitze (8) an den dem jeweils benachbarten Schlitz (8) zugewandten Seiten (22) zur Reduktion der magnetischen Streuflüsse dienende Hohlräume (23) aufweisen.

## Beschreibung

Die Erfindung betrifft eine permanentmagneterregte Maschine mit einem Stator, bestehend aus einem Statorblechpaket mit Nuten zur Aufnahme einer Statorwicklung, und mit einem gegenüber dem Stator drehbar gelagerten Rotor bestehend aus einem auf einer Rotorwelle angeordneten, mit seitlichen Pressplatten abgeschlossenen, Rotorblechpaket mit einer Vielzahl um den Umfang des Rotors angeordneter axialer Schlitze und darin angeordneter Permanentmagnete.

Prinzipiell bezieht sich die vorliegende Erfindung sowohl auf elektrische Maschinen im Motorbetrieb als auch im Generatorbetrieb. Insbesondere bezieht sich die vorliegende Erfindung auf eine permanentmagneterregte Maschine im Generatorbetrieb wie sie bei dieselelektrischen Triebfahrzeugen zur Umwandlung der durch einen Dieselmotor bereitgestellten mechanischen Energie in elektrische Energie verwendet wird.

Insbesondere im Traktionsmaschinenbau werden permanentmagneterregte Maschinen derzeit hauptsächlich wegen der auf die Permanentmagnete wirkenden Fliehkräfte wenig eingesetzt. Durch die fortschreitende Entwicklung auf dem Gebiet der Permanentmagnettechnologie wird eine Anwendung im anspruchsvollen Traktionsbereich jedoch interessant. Permanentmagneterregte Maschinen zeichnen sich durch einen relativ hohen Wirkungsgrad und relativ geringe Verluste im Rotor aus. Aufgrund der geringeren Verluste und der dadurch bedingten geringeren Wärmeentwicklung kann eine einfachere Kühlung der Maschine erfolgen. Auch die Leistungsdichte von permanentmagneterregten Maschinen ist im Vergleich zu Außenpolmaschinen und Asynchronmaschinen höher, so dass bei vergleichbarer Leistung ein niedrigeres Gewicht der Maschine erzielt werden kann.

Bei permanentmagneterregten Maschinen sind die Permanentmagnete entweder in axial angeordneten Nuten oder in axialen Schlitzen untergebracht. Die Variante der sogenannten "vergrabenen" Permanentmagnete, bei welchen die Magnete in axialen Schlitzen im Rotor angeordnet sind, ist insbesondere für die Anwendung im Traktionsbereich vorteilhaft, da die auf die Permanentmagnete wirkenden Fliehkräfte keine Verschiebung der Permanentmagnete bewirken können. Nachteilig bei der Bauweise von permanentmagneterregten Maschinen mit vergrabenen Permanentmagneten ist der höhere Herstellungsaufwand, die komplizierteren Feldverläufe und die entsprechende Berechnung und Dimensionierung der Maschine.

Die US 2005/0023922 A1 zeigt einen Rotor für eine permanentmagneterregte Maschine, bei dem die Permanentmagnete paarweise gegenüber der tangentialen Richtung winkelversetzt sind, so dass stellenweise eine höhere magnetische Feldliniendichte resultiert. Durch Hohlräume im Rotor wird die Feldlinienverteilung ebenfalls beeinflusst.

Auch die EP 923 186 B1 zeigt Varianten einer permanentmagneterregten Maschine, bei der zwischen den Permanentmagneten Löcher angeordnet sind, die einen magnetischen Kurzschluss der magnetischen Feldlinie benachbarter Permanentmagnete verhindern.

Die DE 10 2006 011 729 A1 zeigt einen Rotor einer permanentmagneterregten Synchronmaschine, wobei spezielle Ausgestaltungen der Schlitze im Rotor für die Aufnahme der Permanentmagnete vorgesehen sind, durch welche die Montage der Permanentmagnete erleichtert wird.

Konstruktionen bekannter permanentmagneterregter Maschinen bzw. derer Rotoren weisen häufig den Nachteil auf, dass sie relativ aufwendig sind oder mangelnde mechanische Stabilität aufweisen, aufgrund derer eine Anwendung im Traktionsbetrieb, wo sehr hohe Fliehkräfte auf den Rotor wirken, nicht möglich ist.

Die Aufgabe der vorliegenden Erfindung besteht daher in der Schaffung einer oben genannten permanentmagneterregten Maschine, welche möglichst geringe magnetische Streuflüsse und somit möglichst hohen Wirkungsgrad aufweist, und gleichzeitig möglichst hohe mechanische Stabilität besitzt, so dass eine sinnvolle Anwendung auch im Traktionsbereich möglich ist. Nachteile bekannter Maschinen sollen vermieden oder zumindest reduziert werden.

Gelöst wird die erfindungsgemäße Aufgabe dadurch, dass die Schlitze zur Anordnung der Permanentmagnete an den dem jeweiligen benachbarten Schlitz zugewandten Seiten zur Reduktion der magnetischen Streuflüsse dienende Hohlräume aufweisen. Der Rotor der erfindungsgemäßen permanentmagneterregten Maschine weist im Wesentlichen tangential orientierte Permanentmagnete auf, wobei zur Vermeidung der Streuflüsse zwischen benachbarten Permanentmagneten Hohlräume angeordnet sind, die gleich in den Schlitzen für die Permanentmagnete integriert sind. Dadurch wird einerseits die Herstellung des Rotors vereinfacht, andererseits aber auch die Stabilität des Rotors nicht zu weit beeinträchtigt, da die Stege zwischen den Schlitzen für die Permanentmagnete noch ausreichend groß bleiben können, so dass die Anforderungen an die mechanische Stabilität des Rotors auch für eine Anwendung in Traktionsmaschinen erfüllt werden kann. Die Geometrie der Hohlräume an den Seitenwänden der Schlitze für die Permanentmagnete wird so gewählt, dass ein Verschieben der Permanentmagnete innerhalb der Schlitze nicht möglich ist und es zu keinen unerwünschten Vibrationen der Permanentmagnete kommen kann. Dementsprechend wird der Hohlraum nur über einen Teil entlang der Seite des Schlitzes vorgesehen sein. Durch die Hohlräume werden magnetische Kurzschlüsse seitlich neben dem Permanentmagnet vermieden und es wird der Anteil des magnetischen Nutzflusses, der über den Luftspalt zum Stator übergeht und dort in der Statorwicklung einen Stromfluss hervorruft, erhöht.

Gemäß einem weiteren Merkmal der Erfindung ist vorgesehen, dass die Hohlräume mit Kunststoff ausgefüllt sind. Durch das Ausfüllen, insbesondere Vergießen, der Hohlräume mit Kunststoff wird die mechanische Festigkeit bezüglich der Schwingungen verbessert und die Bruchgefahr der Permanentmagnete reduziert. Der Kunststoff soll sehr schlechte elektrische und magnetische Leitfähigkeit aufweisen. Insbesondere dürfen keine ferromagnetischen Anteile enthalten sein, so dass die magnetischen Feldlinien innerhalb des Hohlraumes nicht geschlossen werden können. Die relative Permeabilität µ_{R} des Kunststoffs soll möglichst gleich 1 sein, so dass die magnetischen Eigenschaften im Wesentlichen jenen von Luft entsprechen.

Vorteilhafterweise ist um den Stator ein Gehäuse, vorzugsweise aus Aluminium, angeordnet. Insbesondere bei der Anwendung in dieselelektrischen Triebfahrzeugen müssen derartige permanentmagneterregte Maschinen vorzugsweise vollständig gekapselt werden, um die Komponenten vor Verschmutzung zu schützen. Um die Gesamtmasse der Maschine gering zu halten, eignen sich Gehäuse aus Aluminium oder Aluminiumlegierungen besonders.

Um die bereits erwähnte Kapselung der Maschine zu ermöglichen, sind beiderseits des Gehäuses mit diesem verbundene Lagerschilde mit jeweils einem Lager zur drehbaren Lagerung der Rotorwelle angeordnet. Auch die Lagerschilde sind vorzugsweise aus Aluminium hergestellt.

Im Stator und allenfalls im Gehäuse sind zur Kühlung der Maschine vorzugsweise axiale Kanäle zur Führung eines Kühlfluids vorgesehen. Die axialen Kanäle können durch Nuten oder Bohrungen im Statorblechpaket und/oder im Gehäuse gebildet sein.

Verbesserungen können dadurch erzielt werden, wenn die Schlitze für die Permanentmagnete im Rotorblechpaket durch zumindest einen im Wesentlichen radial orientierten Steg unterteilt sind und in jedem Schlitz zumindest zwei Permanentmagnete mit jeweils umgekehrter Magnetisierung angeordnet sind. Durch eine derartige Konstruktion können kleinere Permanentmagnete verwendet werden, und durch die Anordnung der Stege wird die mechanische Stabilität des Rotors erhöht. Um den Aufwand bei der Montage des Rotors durch das Einschieben in die dafür vorgesehenen Schlitze nicht zu hoch zu treiben, werden die Schlitze vorzugsweise in zwei, drei oder vier Teile durch Anordnung von einem, zwei oder drei Steg(en) unterteilt werden.

Um das Einkleben der Permanentmagnete in die Schlitze zu erleichtern, sind die Schlitze für die Permanentmagnete an den tangentialen Seiten zur Aufnahme eines Klebstoffs zumindest teilweise verbreitert ausgebildet. Durch die verbreiterte Ausbildung der tangentialen Seiten der Schlitze wird ein Klebespalt gebildet, der verhindert, dass der bereits am Permanentmagnet angeordnete Klebstoff beim Einschieben des Permanentmagneten abgeschabt wird. Umgekehrt kann der entstehende Klebespalt durch die verbreiterte Ausbildung der tangentialen Seiten der Schlitze auch nachträglich mit Flüssigklebern ausgegossen werden.

Im Rotorblechpaket sind vorzugsweise Öffnungen vorgesehen. Diese Öffnungen dienen einerseits dazu, die Masse des Rotors und das Massenträgheitsmoment zu reduzieren. Andererseits können derartige Öffnungen auch zur Kühlung herangezogen werden, da dadurch die wärmeabgebende Oberfläche des Rotors vergrößert wird.

Vorteilhafterweise sind die Öffnungen und auch die Schlitze im Rotor derart ausgebildet, dass die den magnetischen Fluss führenden Bereiche des Rotorblechpakets im Wesentlichen konstante Breite und somit minimalen magnetischen Widerstand aufweisen. Dies bedeutet, dass der Abstand zwischen den Schlitzen und den Öffnungen und auch zwischen den Schlitzen untereinander und zwischen den Öffnungen untereinander so gewählt wird, dass der zu erwartende bzw. der gewünschte magnetische Flussverlauf entlang sogenannter Flussröhren mit konstanter Breite und minimalem magnetischen Widerstand verläuft. Andererseits müssen die Abstände zwischen den Schlitzen und den Öffnungen einerseits und zwischen den Schlitzen untereinander und zwischen den Öffnungen untereinander groß genug sein, so dass der Rotor den auf ihn wirkenden Fliehkräften standhalten kann.

Zur Verringerung des Rastmoments beim Anfahren der Maschine und des Rippelmoments beim Betrieb ist es von Vorteil, wenn die Schlitze und allenfalls Öffnungen im Rotorblechpaket von zumindest einem Blech des Rotorblechpakets zu dem zumindest einen nächsten Blech des Rotorblechpakets winkelversetzt angeordnet sind. In der Praxis wird eine bestimmte Anzahl von Blechen des Rotorblechpakets gleich ausgebildet sein, wohingegen die Schlitze und Öffnungen der bestimmten Anzahl an Blechen, welche dem ersten Teil des Blechpakets benachbart sind, winkelversetzt angeordnet sind. Dadurch wird zwar der Aufwand bei der Produktion des Rotorblechpakets und beim Zusammenstellen der elektrischen Maschine erhöht, jedoch die Nachteile in Bezug auf Rastmoment und Rippelmoment wirkungsvoll reduziert. Dadurch, dass die Bleche des Rotorblechpakets automatisch mittels Laser geschnitten werden können, ist es möglich, die Bleche eines Rotorblechpakets unterschiedlich zu gestalten.

Dabei ist es zum richtigen Anordnen der Bleche des Rotorblechpakets von Vorteil, wenn an jedem Blech des Rotorblechpakets eine Nut oder dergleichen zum Anordnen eines Positionierelements vorgesehen ist. Dadurch wird beim Zusammenbau des Rotors immer die richtige Lage des Blechs in Bezug auf die Rotorwelle gewährleistet.

Zur Kühlung der permanentmagneterregten Maschine ist es von Vorteil, wenn zumindest an einer Seite der Rotorwelle ein Ventilator angeordnet ist, welcher allenfalls zusätzlich zu einer Flüssigkeitskühlung auch Kühlluft durch die Öffnungen des Rotors und allenfalls Öffnungen im Stator bzw. im Gehäuse bläst. Vorteilhafterweise ist an einer Seite der Rotorwelle ein Axial-Ventilator zur Beförderung von Kühlluft durch die Öffnungen im Rotorblechpaket und an der gegenüberliegenden Seite der Rotorwelle ein Radial-Ventilator zur Beförderung der Kühlluft in radialer Richtung zu den Öffnungen im Stator und allenfalls zu den Öffnungen im Gehäuse vorgesehen. Eine derartige Anordnung von Ventilatoren kann natürlich nur für eine Drehrichtung der Maschine verwendet werden, was jedoch im bevorzugten Anwendungsfall der Maschine als Generator bei dieselelektrischen Triebfahrzeugen ohnedies gegeben ist.

Zur Verbesserung der Kühlung können am Gehäuse und/oder an den Lagerschilden auch Luftleitelemente angeordnet sein. Derartige Luftleitelemente können entweder am Gehäuse oder an den Lagerschilden befestigt oder integral mit diesen vorzugsweise im Gussverfahren hergestellt werden.

Weiters ist es von Vorteil, wenn Teile der Statorwicklung mit einer Vergussmasse aus thermisch gut leitfähigem, elektrisch isolierendem Material, beispielsweise Silikonharz, versehen sind. Durch eine derartige Vergussmasse auf den Wickelköpfen der Statorwicklung wird eine verbesserte Kühlung der Wickelköpfe erreicht. Das Vergießen der Wickelköpfe der Statorwicklung kann mit Hilfe entsprechender Schablonen und Formen relativ rasch und einfach vorgenommen werden.

Die vorliegende Erfindung wird anhand der beigefügten Zeichnungen näher erläutert. Darin zeigen:
Fig. 1 einen Querschnitt durch eine permanentmagneterregte Maschine;
Fig. 2 einen Längsschnitt durch die Maschine gemäß Fig. 1;
Fig. 3 ein Detail des Rotors gemäß Fig. 1 in vergrößerter Darstellung; und
Fig. 4 das Detail A aus Fig. 3 in vergrößerter Darstellung.

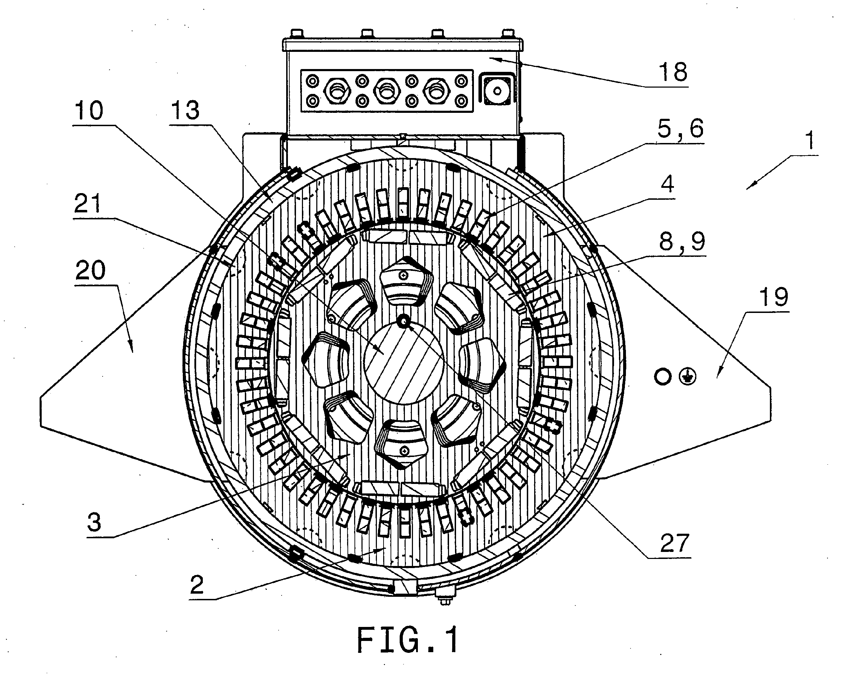

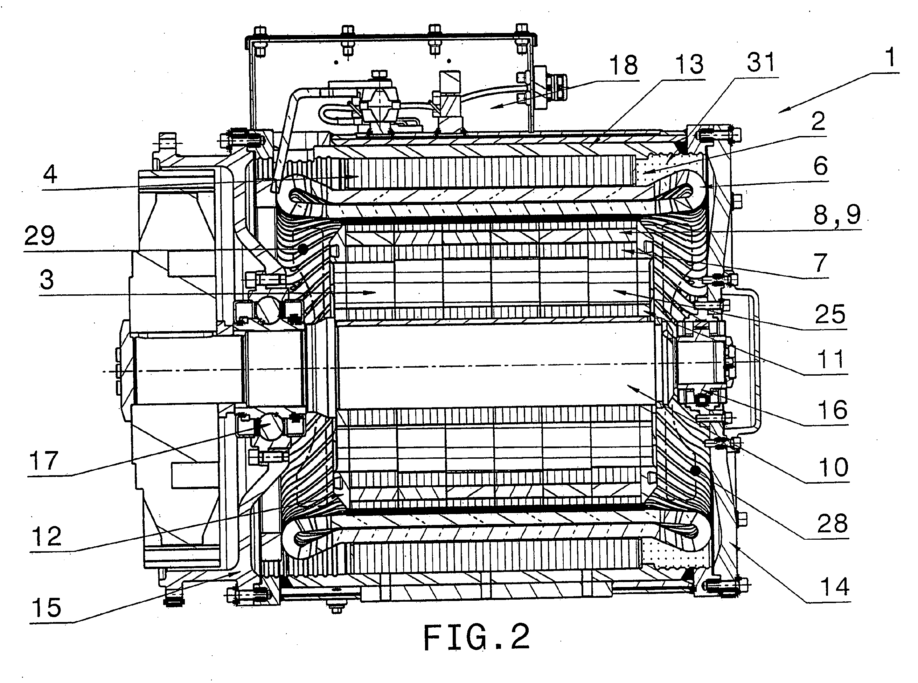

Die permanentmagneterregte Maschine 1 gemäß den Fig. 1 und 2 umfasst einen Stator 2 und einen gegenüber dem Stator 2 drehbar gelagerten Rotor 3. Der Stator 2 besteht aus einem Statorblechpaket 4 mit darin angeordneten Nuten 5 zur Aufnahme der Statorwicklung 6. Der Rotor 3 besteht aus einem Rotorblechpaket 7 mit darin angeordneten Schlitzen 8 zur Aufnahme von Permanentmagneten 9. Das Rotorblechpaket 7 ist drehfest mit einer Rotorwelle 10 verbunden. An den Enden des Rotorblechpakets 7 sind seitliche Pressplatten 11, 12 angeordnet.

Um den Stator 2 ist ein Gehäuse 13, vorzugsweise aus Aluminium, angeordnet und mit seitlichen Lagerschilden 14, 15 mit darin angeordneten Lagern 16, 17 zur drehbaren Lagerung der Rotorwelle 10 verbunden. Am Gehäuse 13 kann ein Anschlusskasten 18 für die elektrischen Anschlüsse und Anschlussflansche 19, 20 zur Befestigung der Maschine 1 vorgesehen sein. Im Stator 2 und allenfalls im Gehäuse 13 können axiale Kanäle 21 zur Führung eines Kühlfluids vorgesehen sein. Derartige axiale Kanäle 21 können sowohl zur Führung einer Kühlflüssigkeit als auch zur Führung von Kühlluft ausgebildet sein.

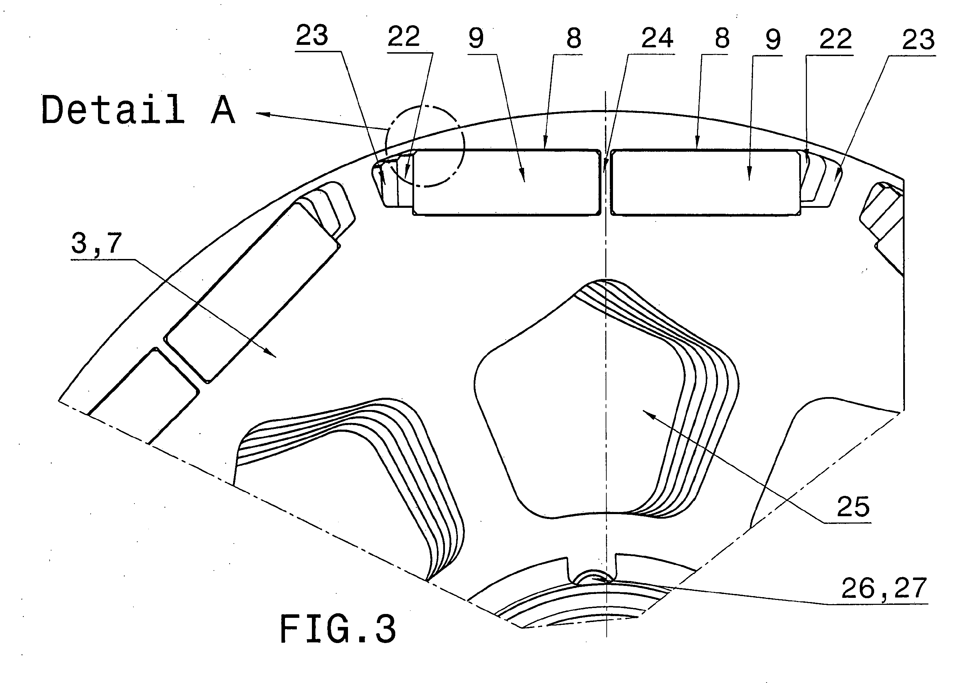

Wie nunmehr anhand der vergrößerten Darstellung gemäß Fig. 3 besser ersichtlich ist, weisen die Schlitze 8 im Rotorblechpaket 7 an den dem jeweils benachbarten Schlitz 8 zugewandten Seiten 22 Hohlräume 23 auf, die zur Reduktion der magnetischen Streuflüsse der Permanentmagnete 9 dienen. Die Hohlräume 23 können freigelassen werden oder mit einem magnetisch nicht oder schlecht leitenden Material, beispielsweise Kunststoff, ausgefüllt werden.

Um die Größe der Permanentmagnete 9 reduzieren zu können und andererseits die mechanische Stabilität des Rotors 3 zu verbessern, können die Schlitze 8 im Rotorblechpaket 7 durch einen oder mehrere im Wesentlichen radial orientierte(n) Steg(e) 24 unterteilt sein. Die tangentialen Seiten der Schlitze 8 sind vorzugsweise verbreitert ausgebildet, so dass Platz zur Aufnahme eines Klebstoffs zum Einkleben der Permanentmagnete 9 im Schlitz 8 gebildet wird. Der Schlitz dieser verbreiterten Ausbildung kann beispielsweise 0,1mm betragen.

Zusätzlich ist es von Vorteil, wenn im Rotorblechpaket 7 des Rotors 3 Öffnungen 25 vorhanden sind. Diese Öffnungen 25 reduzieren einerseits die Masse des Rotors 3 und somit auch das Massenträgheitmoment. Weiters können die Öffnungen 25 auch zur Kühlung des Rotors 3 verwendet werden, indem Luft durch die Öffnungen 25 geblasen wird. Schließlich können die Öffnungen 25 auch zur Optimierung der Flussverläufe innerhalb des Rotors 3 herangezogen werden, indem die geometrische Ausgestaltung der Öffnung 25 so gewählt wird, dass der von den Permanentmagneten 9 ausgehende Nutzfluss in Richtung des Stators 2 möglichst entlang von sogenannten Flusskanälen mit konstanter Breite geführt wird. Im dargestellten Beispiel weist die Öffnung 25 eine im Wesentlichen fünfeckige Gestalt auf, welche durch die Zweiteilung der Permanentmagnete 9 jedes Schlitzes 8 im dargestellten Ausführungsbeispiel bedingt ist.

Zur Reduktion der Welligkeit des Drehmoments ist vorgesehen, dass immer ein Block an Blechen des Rotorblechpakets 7 zum nächsten Block an Blechen des Rotorblechpakets 7 winkelversetzt angeordnet ist. In Fig. 1 ist dies anhand der geringfügig versetzten Öffnungen 25 im Rotorblechpaket 7 erkennbar. Im dargestellten Beispiel sind insgesamt sechs Blöcke an Blechen des Rotorblechpakets 7 jeweils zusammengefasst und gegenüber dem benachbarten Block der Rotorbleche geringfügig versetzt. Dementsprechend sind auch die Permanentmagnete 9 über die Länge des Rotors 3 unterteilt und hintereinander angeordnet. Mit modernen automatisierten Laserschneidverfahren können derartige Bleche relativ rasch und kostengünstig hergestellt werden. Um zu gewährleisten, dass die jeweiligen Bleche in Bezug auf die Rotorwelle 10 richtig positioniert sind, ist in jedem Blech des Rotorblechpakets 7 vorzugsweise eine Nut 26 oder dergleichen angeordnet, in welcher ein entsprechendes Positionierelement 27 platziert werden kann.

Unter Bezugnahme auf die Kühlung der permanentmagneterregten Maschine 1 wird erneut auf Fig. 2 verwiesen, gemäß der mit der Rotorwelle 10 Ventilatoren 28, 29 drehfest verbunden sein können. Bei der Verwendung der Maschine 1 als Generator wird dieser in nur einer Drehrichtung eingesetzt. Für diesen Fall ist es möglich, die Ventilatoren 28, 29 speziell zu gestalten und zwar den Ventilator 28 als Axial-Ventilator, der die Kühlluft durch die Öffnung 25 im Rotor befördert. An der anderen Seite der Rotorwelle 10 ist ein Radial-Ventilator 29 angeordnet, der die von den Öffnungen 25 im Rotor 3 kommende Luft in radialer Richtung und weiter in die axialen Kanäle 21 im Stator 2 und allenfalls Gehäuse 13 leitet. Zusätzlich können an den Lagerschilden 14, 15 oder am Gehäuse 13 auch Luftleitelemente angeordnet sein (nicht dargestellt). Zur Verbesserung der Wärmeabfuhr insbesondere von den Wickelköpfen der Statorwicklung 6 können diese Wickelköpfe mit einer Vergussmasse 31 aus thermisch gut leitfähigem, elektrisch isolierendem Material, beispielsweise Silikonharz, versehen sein. Die Anbringung der Vergussmasse 31 kann relativ einfach durch Verwendung von Gussformen erfolgen.

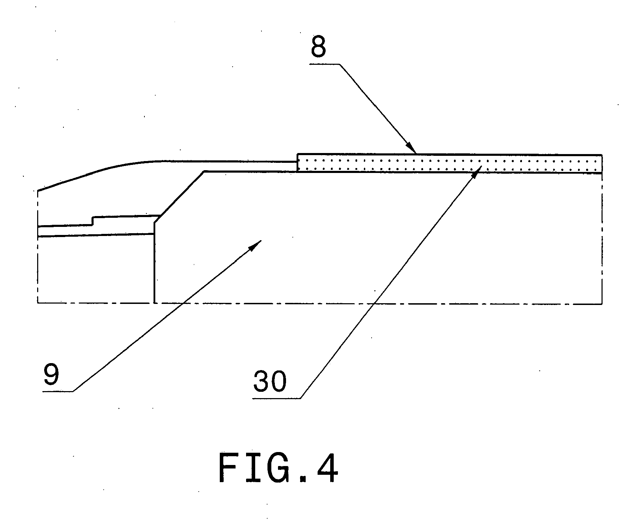

Fig. 4 zeigt das Detail A aus Fig. 3 in vergrößerter Darstellung. Dabei ist der Schlitz 8 für die Permanentmagnete 9 an den tangentialen Seiten zur Aufnahme eines Klebstoffs 30 zum Einkleben der Permanentmagnete 9 zumindest teilweise verbreitert ausgebildet. Dadurch wird verhindert, dass der bereits am Permanentmagnet 9 angeordnete Klebstoff 30 beim Einschieben des Permanentmagneten 9 in den Schlitz 8 abgeschabt wird. Ebenso kann der entstehende Klebespalt durch die verbreiterte Ausbildung der tangentialen Seiten der Schlitze 8 auch nachträglich mit dem Klebstoff 30 ausgegossen werden.

Die beschriebene permanentmagneterregte Maschine 1 zeichnet sich durch einen besonders hohen Wirkungsgrad und besonders hohe mechanische Stabilität aus, welche eine Anwendung auch im Traktionsbereich zulässt. Aufgrund des hohen Wirkungsgrades und der hohen Leistungsdichte kann die Maschine 1 gegenüber herkömmlichen Maschinen relativ klein und mit relativ geringem Gewicht aufgebaut werden.

## Patentansprüche

1. Permanentmagneterregte Maschine (1) mit einem Stator (2), bestehend aus einem Statorblechpaket (4) mit Nuten (5) zur Aufnahme einer Statorwicklung (6), und mit einem gegenüber dem Stator (2) drehbar gelagerten Rotor (3) bestehend aus einem auf einer Rotorwelle (10) angeordneten, mit seitlichen Pressplatten (11, 12) abgeschlossenen, Rotorblechpaket (7) mit einer Vielzahl um den Umfang des Rotors (3) angeordneter axialer Schlitze (8) und darin angeordneter Permanentmagnete (9), **dadurch gekennzeichnet, dass** die Schlitze (8) an den dem jeweils benachbarten Schlitz (8) zugewandten Seiten (22) zur Reduktion der magnetischen Streuflüsse dienende Hohlräume (23) aufweisen.

2. Permanentmagneterregte Maschine (1) nach Anspruch 1, **dadurch gekennzeichnet, dass** die Hohlräume (23) mit Kunststoff ausgefüllt sind.

3. Permanentmagneterregte Maschine (1) nach Anspruch 1 oder 2, **dadurch gekennzeichnet, dass** um den Stator (2) ein Gehäuse (13), vorzugsweise aus Aluminium, angeordnet ist.

4. Permanentmagneterregte Maschine (1) nach Anspruch 3, **dadurch gekennzeichnet, dass** am Gehäuse (13) Aufhängeeinrichtungen (19, 20) angeordnet sind.

5. Permanentmagneterregte Maschine (1) nach Anspruch 3 oder 4, **dadurch gekennzeichnet, dass** beiderseits des Gehäuses (13) mit diesem verbundene Lagerschilde (14, 15) mit jeweils einem Lager (16, 17) zur drehbaren Lagerung der Rotorwelle (10) angeordnet sind.

6. Permanentmagneterregte Maschine (1) nach einem der Ansprüche 1 bis 5, **dadurch gekennzeichnet, dass** im Stator (2) und allenfalls im Gehäuse (13) axiale Kanäle (21) zur Führung eines Kühlfluids vorgesehen sind.

7. Permanentmagneterregte Maschine (1) nach einem der Ansprüche 1 bis 6, **dadurch gekennzeichnet, dass** jeder Schlitz (8) im Rotorblechpaket (7) durch zumindest einen im Wesentlichen radial orientierten Steg (24) unterteilt ist, und dass in jedem Schlitz (8) zumindest zwei Permanentmagnete (9) mit jeweils umgekehrter Magnetisierung angeordnet sind.

8. Permanentmagneterregte Maschine (1) nach einem der Ansprüche 1 bis 7, **dadurch gekennzeichnet, dass** die Schlitze (8) für die Permanentmagnete (9) an den tangentialen Seiten zur Aufnahme eines Klebstoffs (30) zum Einkleben der Permanentmagnete (9) zumindest teilweise verbreitert ausgebildet sind.

9. Permanentmagneterregte Maschine (1) nach einem der Ansprüche 1 bis 8, **dadurch gekennzeichnet, dass** im Rotorblechpaket (7) Öffnungen (25) vorgesehen sind.

10. Permanentmagneterregte Maschine (1) nach einem der Ansprüche 1 bis 9, **dadurch gekennzeichnet, dass** die Öffnungen (25) und die Schlitze (8) derart ausgebildet sind, dass die den magnetischen Fluss führenden Bereiche des Rotorblechpakets (7) im Wesentlichen konstante Breite und somit minimalen magnetischen Widerstand aufweisen.

11. Permanentmagneterregte Maschine (1) nach einem der Ansprüche 1 bis 10, **dadurch gekennzeichnet, dass** die Schlitze (8) und allenfalls Öffnungen (25) im Rotorblechpaket (7) von zumindest einem Blech des Rotorblechpakets (7) zu dem zumindest einen nächsten Blech des Rotorblechpakets (7) winkelversetzt angeordnet sind.

12. Permanentmagneterregte Maschine (1) nach Anspruch 11, **dadurch gekennzeichnet, dass** an jedem Blech des Rotorblechpakets (7) eine Nut (26) oder dgl. zum Anordnen eines Positionierelements (27) vorgesehen ist.

13. Permanentmagneterregte Maschine (1) nach einem der Ansprüche 1 bis 12, **dadurch gekennzeichnet, dass** zumindest an einer Seite der Rotorwelle (10) ein Ventilator (28, 29) angeordnet ist.

14. Permanentmagneterregte Maschine (1) nach einem der Ansprüche 1 bis 13, **dadurch gekennzeichnet, dass** an einer Seite der Rotorwelle (10) ein Axial-Ventilator (28) zur Beförderung von Kühlluft durch die Öffnungen (25) im Rotorblechpaket (7) und an der gegenüberliegenden Seite der Rotorwelle (10) ein Radial-Ventilator (29) zur Beförderung der Kühlluft in radialer Richtung zu den Kanälen (21) im Stator (2) und allenfalls im Gehäuse (13) vorgesehen ist.

15. Permanentmagneterregte Maschine (1) nach Anspruch 13 oder 14, **dadurch gekennzeichnet, dass** am Gehäuse (13) und bzw. oder an den Lagerschilden (14, 15) Luftleitelemente angeordnet sind.

16. Permanentmagneterregte Maschine (1) nach einem der Ansprüche 1 bis 15, **dadurch gekennzeichnet, dass** Teile der Statorwicklung (6) mit einer Vergussmasse (31) aus thermisch gut leitfähigem, elektrisch isolierendem Material, beispielsweise Silikonharz, versehen sind.
